# EUROPÄISCHE PATENTSCHRIFT

(11) **EP 3 576 962 B1**
(45) Veröffentlichungstag und Bekanntmachung des Hinweises auf die Patenterteilung: **20.01.2021**
(21) Anmeldenummer: 18703745.2
(22) Anmeldetag: 02.02.2018
(51) Int. Cl.: B44C 5/04, B05D 3/06, E04F 15/10

(54) **WÄRMEBEHANDELTES PVC-KUNSTSTOFFPANEEL**
HEAT-TREATED PVC-PLASTIC PANEL
PANNEAU EN MATIÈRE PLASTIQUE PVC TRAITÉ THERMIQUEMENT

(30) Priorität: 03.02.2017 WO PCT/EP2017/052369
(43) Veröffentlichungstag der Anmeldung: 11.12.2019
(73) Patentinhaber: Xylo Technologies AG, 9052 Niederteufen (CH)
(72) Erfinder: DÖHRING, Dieter, 01561 Großenhain (DE)
(74) Vertreter: Mader, Joachim
(86) Internationale Anmeldenummer: PCT/EP2018/052672
(87) Internationale Veröffentlichungsnummer: WO 2018/141912

(56) Entgegenhaltungen:
- EP-A1- 3 088 205
- WO-A1-2008/061791
- WO-A2-2011/141849
- DE-A1-102010 011 602
- FR-A1- 2 805 548
- US-A1- 2011 296 780

## Beschreibung

### 1. Gebiet der Erfindung

Die vorliegende Erfindung betrifft ein Verfahren zur Behandlung von PVC Platten, ein verbessertes Paneel, insbesondere ein Wand-, Decken, oder Fußbodenpaneel, basierend auf einer Trägerplatte aus einem harten PVC (PVC-U), sowie ein Verfahren zu dessen Herstellung.

### 2. Hintergrund der Erfindung

Polyvinylchlorid wird seit langem zur Herstellung von Fußbodenbelägen verwendet. Polyvinylchlorid (PVC) ist ein thermoplastischer Werkstoff, der ohne die Zugabe von Hilfsstoffen hart und spröde ist. Die mechanischen Eigenschaften von PVC lassen sich jedoch durch die Zugabe geeigneter Hilfsstoffe, wie etwa Weichmacher, Füllstoffe, Färbemittel, Stabilisatoren, etc. in einem weiten Bereich einstellen. Aus diesem Grund wird hierin unter dem Begriff "PVC" kein reines Polyvinylchlorid verstanden, sondern PVC mit den üblicherweise hinzugefügten und für den praktischen Einsatz notwendigen Hilfsstoffen, sofern keine anderen Angaben gemacht werden.

Ein typisches Beispiel aus dem Stand der Technik ist in der Druckschrift DE 10 2006 058 655 A1 beschrieben. In dieser Druckschrift wird ein Bodenpaneel in der Form eines mehrschichtigen, rechteckigen Laminats mit einer Trägerplatte aus einem weichem Polyvinylchlorid und einer auf der Polyvinylchlorid-Schicht angeordneten Dekorpapierschicht offenbart. Die Aufbringung einer Dekorpapierbahn ist technisch aufwendig und mit erheblichen Kosten verbunden.

Aus der DE 10 2006 029 963 A1 ist ein Bodenbelag aus Polyvinylchlorid bekannt, der mit einer strapazierfähigen Lackschicht beschichtet ist, um die Haltbarkeit des PVC-Bodenbelags zu verbessern. Die Lackschicht basiert auf einem Acrylatharz und soll mittels Strahlung ausgehärtet werden. Der Kern dieser Druckschrift liegt in der Zugabe von elektrisch leitfähigen Substanzen in das Acrylatharz, um den fertigen Bodenbelag mit antistatischen und/oder elektrisch leitenden Eigenschaften zu versehen.

Die WO 2008/061791 A1 desselben Anmelders stellt eine Weiterentwicklung einer Lackbeschichtung dar. Der Inhalt dieser Druckschrift wird hiermit durch in Bezugnahme vollständig aufgenommen. Der Kern der Verbesserung dieser Druckschrift liegt darin, dass auf die Oberfläche eines Paneels zwei flüssige, unterschiedliche Polymerschichten Nass-in-Nass aufgetragen werden, so dass eine teilweise Vermischung der Beschichtungsmittel stattfindet. Diese beiden Nass-in-Nass aufgetragenen Schichten werden dann gemeinsam ausgehärtet, wobei die ausgehärtete resultierende Beschichtung aufgrund der teilweisen Durchmischung einen Härtegradienten aufweist, wobei die Härte der Beschichtung mit zunehmender Tiefe von der Oberfläche der resultierenden Beschichtung her gesehen abnimmt.

Die Druckschrift EP 3088205 A1 bezieht sich auf ein Verfahren zum Herstellen eines dekorierten Wand- oder Bodenpaneels sowie ein gemäß einem solchen Verfahren hergestelltes Wand- oder Bodenpaneel.

Die Druckschrift WO2011/141 849 A1 bezieht sich auf eine Bodenplatte eines Typs, der mindestens ein Substrat und eine darauf vorgesehene Oberschicht umfasst, wobei die Oberschicht ein Motiv umfasst. Das Substrat besteht dabei im Wesentlichen aus einer geschäumten Kunststoffschicht.

Die Druckschrift DE10 2010 011 602 A1 bezieht sich auf ein Verfahren bei welchem die Trägerplatte zunächst auf einer Seite oder beidseitig mit einer Kunststofffolie kaschiert wird. Die kaschierte Trägerplatte wird einem Drucker zugeführt und die Platte mit Bildern oder Grafikmustern bedruckt, wobei die Tinte dann mittels UV-Strahlung gehärtet wird. Dann wird die fertig bedruckte Platte aus dem Drucker entnommen und in Fächerregalen zur Weiterverarbeitung zwischengelagert. Danach wird die bedruckte Trägerplatte mit einem ein- oder mehrschichtigen UV härtbaren Lack versehen. [0004] Die Druckschrift FR2 805 54 8 A1 bezieht sich auf ein Verfahren zur Herstellung eines rutschfesten Bodenbelags, der eine plastifizierte PVC-Grundstruktur umfasst, die mit einem Textilkern verstärkt oder nicht verstärkt ist und einem Oberflächenbelag zugeordnet ist, wobei es sich um eingelassene Partikel handelt, die der Anordnung rutschfeste Eigenschaften verleihen.

Ein grundsätzliches Problem von Platten aus PVC, und damit auch von Paneelen oder Böden die daraus hergestellt wurden, ist, dass sie gegenüber starker Wärmebelastung, wie etwa durch Sonnenstrahlung, wenig beständig sind. Beispielsweise verziehen bzw. wölben sich PVC Platten, wenn sie starker direkter Sonnenbestrahlung ausgesetzt werden. Dies kann etwa vorkommen, wenn die Platten als Fußbodenbelag verwendet werden und nahe großer Fensterflächen verlegt sind, wie etwa in einem Wintergarten oder ähnlichem. Auch andere Wärmeeinflüsse, etwa durch Heizkörper, können zu einem Verzug und dem Auftreten von Wölbungen von PVC Platten führen, so dass deren Einsatz bspw. in Wohnungen gewissen Einschränkungen unterliegt.

Im Lichte dieser bekannten PVC Platten und deren Nachteile stellt sich die vorliegende Erfindung die Aufgabe, ein Verfahren zur Behandlung von PVC Platten bereitzustellen, mit dem die Widerstandsfähigkeit der bekannten Platten verbessert werden kann. Insbesondere ist es die Aufgabe der Erfindung ein Verfahren zur Behandlung von Platten aus PVC bereitzustellen, mit dem die Widerstandsfähigkeit der Platten gegenüber Sonneneinstrahlung und Wärmebelastung erhöht werden kann. Eine weitere Aufgabe besteht darin, ein verbessertes Paneel, insbesondere ein Wand-, Decken- oder Fußbodenpaneel bereitzustellen, das eine Trägerplatte aus einem (insbesondere) Hart-PVC umfasst. Eine weitere Aufgabe liegt in der Bereitstellung eines derartigen Paneels, dass eine verbesserte Haltbarkeit und qualitativ besonders hochwertige dekorative Muster aufweist.

Diese und andere Aufgaben, die beim Lesen der vorliegenden Beschreibung noch genannt werden oder vom Fachmann erkannt werden können, werden mit einem Verfahren zur Behandlung einer Platte aus PVC nach Anspruch 1, einem Paneel nach Anspruch 9 und einem Verfahren zu dessen Herstellung nach Anspruch 25 gelöst.

### 3. Ausführliche Beschreibung der Erfindung.

Die vorliegende Erfindung betrifft ein Verfahren zur Behandlung einer Platte aus Polyvinylchlorid (PVC), umfassend folgende Schritte in der angegebenen Reihenfolge: Bereitstellen einer Platte aus PVC; Erwärmen der Platte aus PVC in einem Ofen auf mindestens 70°C, wobei die Platte mit einem Aufheiz-Gradienten von durchschnittlich 4 °C/min bis 15 °C/min erwärmt wird, und Abkühlen der erwärmten Platte, wobei die Platte kontrolliert abgekühlt wird und zwar mit einem Kühlgradienten von durchschnittlich 5 °C/min bis 15 °C/min. Das Verfahren betrifft demnach eine Wärmebehandlung von PVC Platten. Es hat sich überraschend herausgestellt, dass eine derartige Wärmebehandlung zu einer erheblichen Verbesserung der Widerstandsfähigkeit bekannter Platten aus PVC führt, und zwar insbesondere gegenüber Wärmebelastungen und/oder Sonneneinstrahlung. Es wird vermutet, dass die Erwärmung der Platten bis zu und vorzugsweise über die Glasübergangstemperatur (Glastemperatur) hinaus, zu einer Verringerung der inneren Spannungen der Platte führt. Hierzu sollten die Platten mindestens auf 70°C erwärmt werden, da diese Temperatur nahe der Glasübergangstemperatur herkömmlicher PVC Platten liegt, insbesondere von Hart-PVC. Obwohl die physikalischen und chemischen Zusammenhänge nicht klar sind, wird vermutet, dass die Erwärmung und darauffolgende Abkühlung zu einer Neuausrichtung der Makromoleküle führt, die zu einem Abbau der inneren Spannungen führt, bzw. letztendlich zu einer Verbesserung der Widerstandsfähigkeit der Platte. Insbesondere kann durch die erfindungsgemäße Behandlung der PVC Platte ein Verzug der Platte bzw. das Auftreten von Wölbungen wirksam verringert bzw. verhindert werden, wenn die PVC Platte bspw. starker direkter Sonneneinstrahlung ausgesetzt wird. Die Behandlung nach der vorliegenden Erfindung kann an ansonsten unbehandelten PVC Platten durchgeführt werden, so wie diese bspw. aus dem Extruder kommen. Sie kann aber auch noch nachträglich an Paneelen angewandt werden, die über PVC Platten als Trägerplatte verfügen und gegebenenfalls noch weitere Schichten aufweisen. Beispiele derartiger Paneele werden im Rahmen der vorliegenden Offenbarung noch genauer beschrieben.

Vorzugsweise wird die Platte auf mindestens ihre Glasübergangstemperatur erwärmt und besonders vorzugsweise auf mindestens 75°C, mehr bevorzugt auf mindestens 79°C, mehr bevorzugt auf mindestens 81°C, noch mehr bevorzugt auf mindestens 85°C. Die Glasübergangstemperatur von PVC liegt bei etwa 80°C kann jedoch abhängig von den verwendeten Zusatzstoffen auch etwas darunter oder darüber liegen. Für die Zwecke der vorliegenden Erfindung ist es vorteilhaft, wenn die Glasübergangstemperatur des verwendeten PVC leicht, d.h. um einige Grad überschritten wird. Dabei sollte vorzugsweise die Platte aus PVC vollständig die gewünschte Temperatur erreichen, d.h. auch der Kern der Platte sollte vorzugweise die gewünschte Mindesttemperatur aufweisen. Aufgrund der geringen Wärmeleitfähigkeit des PVC dauert es jedoch unter Umständen relativ lange bis sich auch der Kern, d.h. bspw. die innerste Schicht, der PVC Platte auf die gewünschte Temperatur eingestellt hat. Es wird daher bevorzugt die Wärmeenergie bei der Extrusion der Platte zu nutzen und die Platte nach der Extrusion nicht vollständig abkühlen zu lassen. Stattdessen lässt man die Platte auf nur 40 - 50 °C abkühlen und erwärmt sie anschließend in einem Ofen über Glastemperatur. Dabei sollte vorzugsweise das gesamte Plattenvolumen gleichmäßig erwärmt werden. Auf diese Weise werden besonders dimensionsstabile Platten erreicht.

Vorzugsweise wird die Platte auf der Mindesttemperatur für zumindest 3 Minuten gehalten, mehr bevorzugt mindestens 5 Minuten und am meisten bevorzugt mindestens 10 Minuten. Es hat sich gezeigt, dass die inneren Spannungen der Platte, bzw. der beabsichtigte und erfindungsgemäße Effekt, am sichersten erreicht werden können, wenn die Platte für einige Zeit auf der gewünschten Mindesttemperatur gehalten wird, bevor sie wieder abgekühlt wird.

Die Platte wird mit einem Aufheiz-Gradienten von durchschnittlich 4°C/min bis 15°C/min; mehr bevorzugt von durchschnittlich 6°C/min bis 12°C/min und am meisten bevorzugt von durchschnittlich 7°C/min bis 10°C/min. Die Wärmeleitfähigkeit von PVC ist relativ gering, so dass eine langsame Aufwärmung vorteilhaft ist, da ansonsten die äußersten Teile der Platte gegebenenfalls erheblich über der gewünschten Mindesttemperatur liegen, während das Innere der Platte noch verhältnismäßig kalt ist. Die langsame Erwärmung in den gegebenen Bereichen bewirkt somit eine gleichmäßige Erwärmung und damit eine gleichmäßigere Umorientierung bzw. Neuausrichtung der Moleküle (soweit diese verstanden ist, die genauen Effekte der Erwärmung auf die Ausrichtung der Moleküle sind noch nicht vollständig bekannt). Es wird vermutet, dass diese Gleichmäßigkeit für die besonders guten Eigenschaften derartig langsam erwärmter Platten maßgeblich ist. Bei einem Aufheiz-Gradienten von bspw. 1°C/min würde sich die Platte in einer Stunde um ca. 60°C erwärmen. Dabei erfolgt die Erwärmung zu Beginn aufgrund der hohen Temperaturdifferenz zwischen der noch kalten Platte und der Ofentemperatur abhängig vom verwendeten Ofen und der Heizart möglicherweise schneller als gegen Ende des Prozesses. Der Aufheiz-Gradient kann also zu Beginn der Erwärmung größer sein als gegen Ende des Prozesses, obwohl dieser Effekt durch eine geeignete Ofenwahl bzw. Ofensteuerung minimiert werden kann. Die Angaben zum Gradienten sind hierin daher als durchschnittliche Gradienten zu verstehen, in dem Sinne, dass ein Gradient von bspw. 2°C/min bedeutet, dass es ca. 40 Minuten dauert bis eine Platte von 20°C auf 100°C erwärmt wurde. Auch hier ist es wiederum ausreichend, dass ein Großteil der Masse der Platte auf die gewünschte Temperatur gebracht wurde, wie etwa 90% der Masse, wenn es auch grundsätzlich wünschenswert ist, dass die Platte vollständig erwärmt wird.

Von gleicher Bedeutung wie das Aufheizen der Platte ist der Abkühlprozess. Bei schneller und ungleichmäßiger Abkühlung (z.B. Schockkühlung in einem Wasserbad mit Raumtemperatur) kann trotz vorherigen Erwärmens nur eine geringe bzw. keine Verbesserung der Stabilität festgestellt werden. Um eine Verbesserung zu erreichen, sollte die Platte wenigstens auf 50 - 40 °C langsam und gleichmäßig abgekühlt werden. Von Vorteil ist ein langsames Abkühlen durchaus bis Raumtemperatur. Allerdings ist eine deutliche Verbesserung der Stabilität auch dann zu verzeichnen, wenn die Platte nach Erreichen einer Temperatur von 50 °C in ein Wasserbad gefahren wird, allerdings sollte das Wasserbad dabei eine Wassertemperatur von nicht weniger als 35 - 25 °C haben (je nach Ausgangstemperatur der zu tauchenden Platte; die Temperaturdifferenz zwischen Platte und Wasserbad sollte nicht zu groß sein).

Die Platte wird, vorzugsweise in einem Abkühlofen, kontrolliert und über die Fläche gleichmäßig abgekühlt auf eine Mindesttemperatur im Plattenkern von 30 - 50 °C und zwar mit einem Kühlgradienten von durchschnittlich durchschnittlich 5°C/min bis 15°C/min; mehr bevorzugt von durchschnittlich 7°C/min bis 12°C/min und am meisten bevorzugt durchschnittlich von 8 °C/min bis 10°C/min. Der Kühlgradient ist hierin genauso zu verstehen, wie der Aufheiz-Gradient, mithin als Durchschnittswert bis die Platte im Kern ungefähr die 30 bis 50°C erreicht hat, also bspw. nur noch 10 Grad wärmer als die Umgebung ist. Das langsame und kontrollierte Abkühlen führt zu besonders widerstandsfähigen Platten. Es wird vermutet, dass die langsame Abkühlung zu einer guten Fixierung der Ausrichtung der Moleküle führt.

Vorzugsweise wird die Platte aus PVC auf einer Fördereinrichtung durch den Ofen geführt und der Ofen ist ein Durchlaufofen. Eine Erwärmung und/oder Abkühlung in einem derartigen kontinuierlichen Verfahren ist besonders wirtschaftlich, da in einem Durchlaufofen verschiedene Wärmezonen mit unterschiedlichen Temperaturen realisiert werden können. So kann bspw. die Temperatur im Ofen in Transportrichtung durch den Ofen kontinuierlich erhöht bzw. verringert werden, wodurch gleichmäßige Gradienten für Aufheizung bzw. Abkühlung realisiert werden können.

Vorzugsweise erfolgt das Abkühlen der aufgewärmten Platte in einem Durchlaufofen. Auch hier ist es vorteilhaft möglich, entlang der Transportrichtung der Platten durch den Ofen unterschiedliche Temperaturbereiche vorzusehen, so dass der Abkühlgradient möglichst gleichmäßig gehalten wird, indem etwa die Temperaturdifferenz zwischen der Platte und der Umgebung des Ofens ungefähr konstant gehalten wird. Die Temperatur innerhalb des Ofens nimmt dabei entlang der Transportrichtung der Platte durch den Ofen (Abkühlofen) vorteilhaft ab. Wenn die Platte den Ofen verlässt hat sie vorzugweise eine Temperatur ähnlich der Umgebungstemperatur, also bspw. nur 10°C oder 20 °C über der Umgebungstemperatur.

Gemäß der vorliegenden Erfindung wird weiter ein Paneel bereitgestellt, das eine Platte (im Rahmen der Beschreibung des Paneels werden im Folgenden die Begriffe Platte und Trägerplatte synonym verwendet) aus Polyvinylchlorid umfasst, welche vorzugsweise nach den oben erläuterten Verfahren behandelt wurde. Auf der Platte ist eine Folie befestigt, wobei die Folie eine PVC-Folie mit einer Stärke von 0,04 bis 0,2 mm ist und ein darauf direkt aufgedrucktes dekoratives Muster umfasst und über der PVC-Folie eine ausgehärtete Polymerschicht vorgesehen ist. Die Polymerschicht basiert dabei generell bevorzugt auf einem polymerisierbaren Harz, wie insbesondere einem Acrylatharz. Generell bevorzugt weist die ausgehärtete Polymerschicht einen Härtegradienten auf gemäß der eingangs beschriebenen WO 2008/061791 desselben Anmelders. Die Wärmebehandlung der Platte aus PVC wird bevorzugt nach dem Aufbringen der Folie (bevorzugt PVC-Folie) durchgeführt. Der Dekordruck und das Aufbringen der weiteren Schichten erfolgt vorzugsweise nach der Wärmebehandlung der mit der Folie versehenen PVC-Platte.

Die Platte aus Polyvinylchlorid besteht grundsätzlich vorzugsweise aus Hart-PVC (auch als PVC-U bezeichnet), d.h. sie umfasst im Wesentlichen keine bzw. keine Weichmacher. Dies gilt für alle hierin beschriebenen Verfahren und Produkte.

Im Unterschied zum eingangs genannten Stand der Technik DE 10 2006 058 655 A1 stellt die vorliegende Erfindung ein Paneel bereit, das kein separates Dekorpapier erfordert, da das dekorative Muster direkt auf die PVC-Folie gedruckt wird. Die PVC-Folie hat den Vorteil, dass auf aufwendige Vorbehandlungen der Trägerplatte verzichtet werden kann (obwohl Vorbehandlungen selbstverständlich möglich sind, sollte dies gewünscht sein). Insbesondere kann auf ein aufwendiges Schleifen der Oberfläche der Trägerplatte verzichtet werden und das Auftragen von Spachtelmasse und Grundierung, wie es im Stand der Technik typischerweise notwendig ist, kann bei Verwendung einer PVC-Folie in der erfindungsgemäßen Dicke ebenfalls vorteilhaft entfallen.

In einer bevorzugten Ausführungsform weist die Polymerschicht einen Härtegradienten auf, so dass die Härte der Polymerschicht mit zunehmender Tiefe von der Oberfläche der Polymerschicht her gesehen im Wesentlichen kontinuierlich abnimmt. Eine derartige Schicht mit Härtegradient wirkt vorteilhaft mit der relativ weichen PVC-Folie zusammen und erreicht unter anderem eine gute Schalldämmung.

Vorteilhaft ist die zum Drucken des dekorativen Musters verwendete Druckfarbe lösungsmittelhaltig und bevorzugt eine UV-Druckfarbe. Derartige Druckfarben lösen die Oberfläche der PVC-Folie leicht an, wodurch es zu einer festen Verankerung der Druckfarbe auf der Folie kommt. Auch bei Verwendung von UV-Tinten kommt es zu einer sehr guten Vernetzung der Tinte mit der Oberfläche der PVC-Folie. UV-Tinten werden daher besonders bevorzugt, da sie Reaktivlösungsmittel enthalten, die chemisch in das spätere Netzwerk eingebaut werden, wie beispielsweise N-Vinylcaprolactam.

Bevorzugt wird zum Drucken des dekorativen Musters daher eine polymerisierbare Druckfarbe (Tinte) verwendet, insbesondere basierend auf polymerisierbaren Acrylatharzen und/ oder N-Vinylcaprolactam (eines flüssigen Reaktivverdünners), wie er von der Firma BASF angeboten wird. Die Anmelder haben überraschend festgestellt, dass verbesserte Hafteigenschaften des Schichtsystems erreicht werden können, wenn nicht die üblichen wasserbasierten Dispersionsfarben verwendet werden, sondern stattdessen polymerisierbare Druckfarben verwendet werden. Dies gilt insbesondere bei der bevorzugten Anwendung mit einer Polymerschicht, insbesondere mit Härtegradient. Als geeignete Gewichtsanteile für die Menge an polymerisierbarem Acrylat und N-Vinylcaprolactam in der Druckfarbe haben sich 2 bis 50, mehr bevorzugt 5 bis 40 und am meisten bevorzugt von 10 bis 30 % erwiesen. Diese Angaben beziehen sich auf die Summe von Acrylat und N-Vinylcaprolactam. Der Gewichtsanteil des N-Vinylcaprolactam in der Druckfarbe beträgt zweckmäßig bspw. 3 bis 12 %.

Der positive Effekt ist besonders ausgeprägt, wenn die Druckfarbe der Dekorschicht (d.h. des dekorativen Musters) und die Polymerschicht gemeinsam ausgehärtet bzw. polymerisiert werden (wenn die Dekorschicht direkt aufgedruckt wird, wie etwa im Digitaldruck, besteht die Dekorschicht quasi aus der Druckfarbe). Unter Aushärtung einer Polymerschicht beziehungsweise einer polymerisierbaren Druckfarbe (wie polymerisierbare Acrylate bzw. UV-reaktive Farben im Allgemeinen) wird hierin die chemische Reaktion verstanden, die bei der Polymerisation stattfindet. Durch die gemeinsame Aushärtung (Polymerisation) der polymerisierbaren Bestandteile (Acrylatsysteme und/oder N-Vinylcaprolactam) von Druckfarbe und Polymerschicht erfolgt eine chemische Vernetzung an der Grenzfläche der beiden Schichten, von der angenommen wird, dass sie für die verbesserte Haftung der Schichten verantwortlich ist.

Polymerisierbare Bestandteile wie sie bei der vorliegenden Erfindung bevorzugt zum Einsatz kommen umfassen als Hauptbestandteile Acrylate, wie insbesondere Acrylat-Monomere, -Oligomere und optional Fotoinitiatoren aber auch N-Vinylcaprolactam als flüssigen Reaktivverdünner. N-Vinylcaprolactam kann der Druckfarbe zusätzlich zu den Acrylaten als Verdünner zugegeben werden und polymerisiert zusammen mit diesen aus. Alternativ ist es auch möglich auf die Acrylate zu verzichten und eine entsprechend größere Menge an N-Vinylcaprolactam vorzusehen, da das N-Vinylcaprolactam selbst polymerisiert werden kann. Details hierzu sind dem Fachmann beispielhaft aus der deutschen Veröffentlichungsschrift DE 197 02 476 A1 bekannt. In bevorzugten Ausführungsformen bestehen die polymerisierbaren Bestandteile daher im Wesentlichen aus N-Vinylcaprolactam. Die Fotoinitiatoren bewirken unter Einwirkung von Strahlung eine Polymerisation der Monomere bzw. Oligomere, wodurch die Druckfarbe schnell aushärtet.

Vorzugsweise hat die PVC-Folie eine Stärke von 0,05 bis 0,15 mm, mehr bevorzugt von 0,06 bis 0,095 mm. Derartige Stärken (Dicken) lassen sich sehr gut verarbeiten und insbesondere gut mit einem Kalander aufbringen. Beispielsweise kann die PVC-Folie direkt mittels eines beheizten Kalanders aufgebracht werden, so dass es zu einer thermischen Verbindung/Verschmelzung der Folie mit der Trägerplatte kommt. Die Verwendung eines zusätzlichen Klebstoffs zum Befestigen der Folie auf der Trägerplatte bedarf es dann nicht, obwohl dies alternativ oder zusätzlich natürlich möglich ist.

Vorzugsweise hat die Platte aus Polyvinylchlorid eine Dichte von 900 bis 2.500 kg/m³, vorzugsweise 1.000 bis 2.200 kg/m³, mehr bevorzugt von 1.300 bis 1.950 kg/m³ und am meisten bevorzugt von 1.350 bis 1.500 kg/m³. Derartige Dichten ergeben sehr robuste und widerstandsfähige Platten, die insbesondere bei der Verwendung der Paneele als Fußbodenbelag vorteilhaft sind. Außerdem erlauben diese Platten die Einarbeitung von Verriegelungs- oder Kopplungselementen an den Seitenkanten der Platte, um bspw. mehrere gleichartige Platten miteinander formschlüssig verbinden zu können.

Als vorteilhaft hat sich eine Dicke (Stärke) für die Platte aus PVC (bzw. Trägerplatte) zwischen 3 und 20 mm, bevorzugt zwischen 4 und 15 mm, mehr bevorzugt zwischen 3 und 12 mm und am meisten bevorzugt zwischen 4 und 10 mm erwiesen. Es hat sich herausgestellt, dass diese Bereiche für die Dicken der Trägerplatte eine ausreichende Stabilität während des Herstellungsverfahrens bereitstellen und darüber hinaus eine ausreichend hohe Trittschallabsorption (bei Verwendung als Fußbodenbelag) und Formstabilität des fertigen Paneels bieten.

In einer bevorzugten Ausführungsform ist auf der PVC-Folie eine Schicht umfassend einen UV-Primer vorgesehen. Diese Schicht hat bevorzugt eine Flächenmasse von 1 bis 20 g/m², mehr bevorzugt 2 bis 15 g/m², und am meisten bevorzugt von 2 bis 5 g/m² auf. Als geeignetes Material hat sich Dipropylenglycoldiacrylat erwiesen, dass bspw. in einer Menge von 2 g/m² gute Wirkung erzielt. Der Primer wird vorzugsweise auf die Druckfarbe aufgetragen und verbessert so die Haftung zwischen Druckfarbe, Untergrund und der Polymerschicht. Es hat sich gezeigt, dass insbesondere in Bereichen mit wenig Druckfarbe die Haftung durch Verwendung des Primers verbessert wird.

Generell bevorzugt ist die Platte aus PVC eine extrudierte PVC-Platte.

In einer bevorzugten Ausführungsform werden in die Polymerschicht abriebfeste Partikel, insbesondere Korundpartikel, mit einem mittleren Durchmesser von 10 bis 100 µm, bevorzugt 20 bis 80 µm, mehr bevorzugt 25 bis 70 µm und besonders bevorzugt von 30 bis 60 µm eingebettet. Durch die abriebfesten Partikel besteht die Möglichkeit, die Lebensdauer eines erfindungsgemäßen Paneels erheblich zu steigern.

In einer bevorzugten Ausführungsform stellt das dekorative Muster, das auf die PVC-Folie grundsätzlich bevorzugt direkt mittels eines Digitaldruckverfahrens aufgebracht wurde, die einzige Dekorschicht des erfindungsgemäßen Paneels dar, d.h. es sind keine weiteren Dekorpapiere oder Dekorfolien vorgesehen. Es besteht somit keine Notwendigkeit mehr ein separates Dekorpapier oder dergleichen vorzusehen, was zu einer erheblichen Kostenreduzierung und Verfahrensvereinfachung bei der Herstellung eines erfindungsgemäßen Paneels führt.

Wie eingangs erwähnt, ist gemäß einer bevorzugten Ausführungsform der Erfindung die Druckfarbe der Dekorschicht (des dekorativen Musters) gemeinsam mit der darüber aufgebrachten Polymerschicht ausgehärtet (polymerisiert), vorzugsweise durch eine gemeinsame Bestrahlung derselben. Hierdurch kommt es an der Grenzschicht zwischen der Druckfarbe und der darüber aufgebrachten Polymerschicht(en) teilweise zu einer chemischen Vernetzung der verwendeten Polymere. Es hat sich gezeigt, dass dabei eine besonders gute Haftung der Polymerschicht auf der Trägerplatte erreicht werden kann.

Gemäß der vorliegenden Erfindung wird weiterhin ein Verfahren zum Herstellen eines Paneels, insbesondere eines Wand-, Decken- oder Fußbodenpaneels bereitgestellt. Bei diesem Verfahren wird in einem ersten Arbeitsschritt eine Platte (Trägerplatte) aus Polyvinylchlorid bereitgestellt, die vorzugsweise mit einem der oben beschriebenen Verfahren (Wärmebehandlung/Temperbehandlung) behandelt wurde. Die Platte weist zudem vorzugsweise eine Dichte von 900 bis 2.500 kg/m³ auf. Alternativ kann auch eine unbehandelte PVC Platte bereitgestellt werden und die oben beschriebene Wärmebehandlung erst nachträglich durchgeführt werden, etwa nachdem einige oder alle weiteren Schichten auf die Platte appliziert wurden. Auf diese Trägerplatte wird eine PVC-Folie mit einer Stärke von 0,04 bis 0,2 mm, vorzugsweise mittels eines Kalanders, aufgetragen und anschließend erfolgt vorzugsweise die Wärmebehandlung. Nach der Wärmebehandlung wird ein dekoratives Muster auf die PVC-Folie gedruckt. Nach dem Aufdruck des dekorativen Musters auf die PVC-Folie wird eine flüssige erste Polymerschicht auf die Grundierungsschicht aufgetragen. In einem weiteren Schritt wird die Polymerschicht, vorzugsweise gemeinsam mit der Druckfarbe, ausgehärtet. Optional kann zumindest eine zweite Polymerschicht flüssig auf die noch feuchte erste Polymerschicht aufgetragen werden, so dass eine teilweise Vermischung der Beschichtungsmittel stattfindet. Die Aushärtung der Druckfarbe und der Polymerschicht(en) kann in einem Verfahrensschritt aber auch nacheinander in zwei separaten Verfahrensschritten erfolgen. Unter Härten oder Aushärtung einer Polymerschicht wird hierbei die chemische Reaktion verstanden, die bei der Polymerisation stattfindet. Hiervon zu unterscheiden ist das Trocknen derartiger Schichten, bei dem lediglich der Wassergehalt reduziert bzw. entfernt wird.

Vorzugsweise werden die erste und die zweite Polymerschicht derart aufgetragen, dass die ausgehärtete Polymerschicht einen Härtegradienten aufweist, wobei die Härte der Beschichtung mit zunehmender Tiefe von der Oberfläche der resultierenden Beschichtung her gesehen abnimmt. Dieser Prozess ist näher in der eingangs erwähnten WO 2008/061791 A1 beschrieben, so dass hier auf weitere Details verzichtet wird.

Vorzugsweise wird ein beheizter Kalander verwendet, derart, dass die PVC-Folie mit der Trägerschicht thermisch verschweißt wird. Auf diese Weise kann das Aufbringen und Befestigen der Folie einfach und sicher in einem Arbeitsschritt erfolgen.

Weiter bevorzugt imitiert das direkt aufgedruckte dekorative Muster eine Holz-, Stein-, oder Fliesenoberfläche. Die PVC-Folie ist grundsätzlich bevorzugt unifarben oder weiß. Dies bietet eine gute Hintergrundfarbe für die meisten kommerziell verwendeten Dekore.

Im Folgenden sollen die Vorteile anhand zweier nicht beschränkender Beispiele näher erläutert werden (die nicht durch die Ansprüche gestützten Beispiele sind als nicht Teil der Erfindung anzusehen) :

### Referenzbeispiel: "Paneel mit herkömmlichem indirekten Tiefdruck"

Eine PVC-Trägerplatte mit einer Stärke von 4 mm wird zunächst über ein Walzenauftragswerk mit einem Primer auf Basis einer handelsüblichen wässrigen Acrylatdispersion versehen. In einem nächsten Schritt erfolgt das Glätten der PVC-Trägerplatte über ein Walzenauftragswerk mittels einer Spachtelmasse basierend auf einer hochgefüllten wässrigen Acrylatdispersion. Anschließend wird ein Druckgrund auf Basis einer mit Füllstoffen und Farbpigmenten versetzten wässrigen Acrylatdispersion mittels Gießverfahren appliziert. Nach jedem dieser Beschichtungsschritte erfolgt ein Zwischentrocknen bei Temperaturen zwischen 80 und 200 °C. Die so behandelten PVC-Trägerplatten werden einer Druckmaschine im Wesentlichen bestehend aus einer Gravurwalze (Gravurzylinder) und einer Gummiwalze für die Übertragung des Druckbildes vom Gravurzylinder auf die Platte zugeführt. Das Druckbild wird über drei nachgeschaltete Druckwerke erzeugt, wobei durch jedes Druckwerk eine eigene Druckfarbe bestehend aus Farbpigmenten und einer wässrigen Acrylatdispersion aufgetragen wird. Bei einer Imitation eines dunklen Nussbaumholzes werden beispielsweise 5 g/m² Druckfarbe appliziert. Auf die Druckfarbenschicht wird im weiteren Prozess ein handelsüblicher UV-Primer über ein Walzenauftragswerk aufgetragen. Schließlich erfolgt der Auftrag der Polymerschicht wie in der WO 2008/061791 beschrieben, um eine Polymerschicht mit Härtegradient zu erzeugen.

### Beispiel: "Paneel, bei dem das Muster auf eine PVC-Folie gedruckt wird"

Es wird eine 6 mm starke PVC-Trägerplatte aus Hart-PVC verwendet und darauf eine PVC-Folie mit einer Dicke (Stärke) von 0,03 mm mittels eines beheizten Kalanders appliziert, so dass die Folie mit der Trägerplatte thermisch verschweißt wird. Die so hergestellte Platte wird anschließend nach Zwischenkühlung auf 30 - 50 °C vorzugsweise der oben beschriebenen Wärmebehandlung unterzogen. Auf die befestigte PVC-Folie wird mittels Digitaldrucker das gleiche Dekorbild wie in Beispiel 1 erzeugt. Verwendung findet dabei jedoch eine lösungsmittelhaltige, UV- strahlenhärtende Digitaldruckfarbe. Für die Erzeugung des Druckbildes wird eine Farbmenge von etwa 2 g/m² benötigt. Die Farbe wird zunächst mit 150 mJ/cm² (Quecksilber) fixiert. Darauf erfolgt der Auftrag von 2 g/m² einer ersten UV-härtenden Schicht, die vorwiegend Dipropylenglycoldiacrylat enthält. Auf diese nicht bestrahlte Schicht wird ein doppelbindungshaltiges, mit Photoinitiatoren versetztes Oligomer aufgetragen. Der Verbund wird anschließend mit einer UV-Strahlenquelle bestrahlt und die polymerisierbaren Bestandteile ausgehärtet. Die daraus resultierende Polymerschicht umfasst die Druckfarbe und alle darüberliegenden Schichten.

### 4. Beschreibung von bevorzugten Ausführungsformen

Im Folgenden wird die Erfindung anhand der Figuren näher erläutert, wobei:
Fig. 1a schematisch eine Anlage zur Wärmebehandlung einer Platte aus PVC zeigt;
Fig. 1b schematisch den Temperaturverlauf in der Anlage zeigt;
Fig. 2 eine schematische Darstellung eines Paneels 10 mit einer Trägerplatte 12 aus Polyvinylchlorid zeigt;
Fig. 3 eine Anlage zur Beschichtung in schematischer Ansicht zeigt; und
Fig. 4 schematisch einen Versuchsaufbau zum Vergleich von behandelten und unbehandelten Paneelen zeigt.

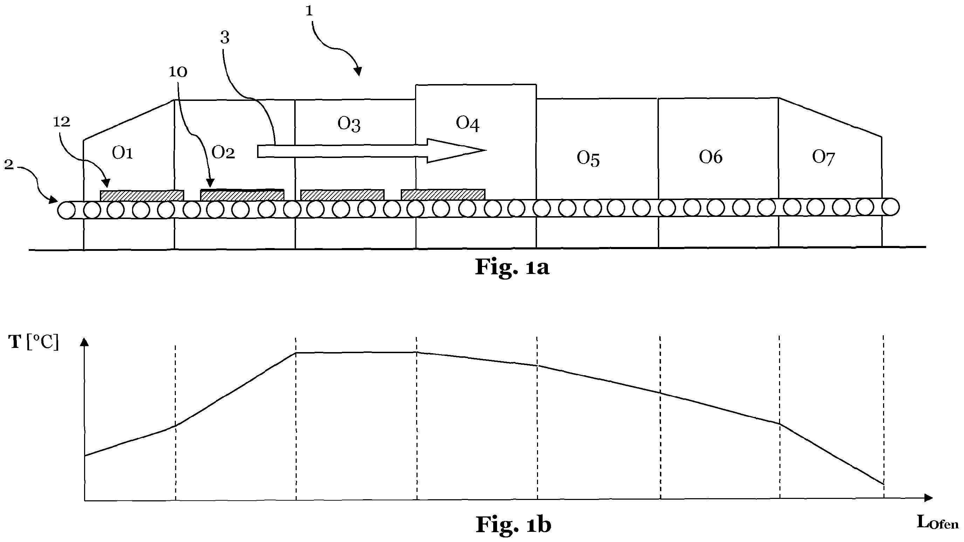

In Figur 1 ist schematisch eine Anlage zur Wärmebehandlung einer Platte aus PVC gezeigt. Die Anlage besteht im Wesentlichen aus einem Ofen 1, der im gezeigten Beispiel ein Durchlaufofen ist. Der Ofen weist eine Fördereinrichtung 2 auf, mit der zu behandelnde Teile in Richtung des Pfeils 3 durch den Ofen hindurchbewegt werden. Mit dem Bezugszeichen 12 sind PVC Platten bezeichnet, die von links nach rechts durch den Ofen gefördert werden. Mit Bezugszeichen 10 werden hierin fertige Paneele bezeichnet, die wie unten beispielhaft beschrieben bereits mit Beschichtungen bzw. Folien versehen sind. Auch derartige beschichtete Paneele 10 können einer Wärmebehandlung unterzogen werden, um die jeweiligen Trägerplatten 12 der Paneele 10 entsprechend zu behandeln. Der Ofen 1 weist sieben Zonen O1 bis O7 auf, in denen unterschiedliche Temperaturen vorliegen. Selbstverständlich ist die gezeigte Anlage nur rein beispielhaft und es sind auch Anlagen mit mehr oder weniger Zonen möglich, sowie Anlagen mit gänzlich anderen Temperaturprofilen als hierin beispielhaft vorgestellt. Die Platten 12 bzw. Paneele 10 treten in die erste Zone O1 des Ofens ein. Die Temperatur innerhalb der ersten Zone O1 steigt dabei kontinuierlich in Förderrichtung des Ofens an.

Der Temperaturverlauf bzw. das Temperaturprofil innerhalb der einzelnen Zonen des Ofens ist in der Figur 1b dargestellt. Dabei ist die Temperatur auf der vertikalen Achse abgebildet und die horizontale Achse entspricht dem Verlauf entlang der Länge des Ofens (L_{Ofen}). Die gestrichelten Linien deuten den Übergang zwischen den verschiedenen Zonen O1 bis O7 an. Im dargestellten Beispiel steigt die Temperatur innerhalb der Zone O1 kontinuierlich mit einer relativ geringen Steigerungsrate an. Der Grund hierfür liegt darin, dass die Paneele bzw. Platten bei Eintritt in den Ofen eine relativ niedrige Temperatur haben, wie etwa Raumtemperatur, und daher bereits relativ niedrige Ofentemperaturen zu einer schnellen Aufheizung bzw. Erwärmung der Platten führen. Denn die Geschwindigkeit mit der Körper erwärmt werden, hängt grundsätzlich von der Temperaturdifferenz zwischen dem Körper und der bspw. umgebenden Luft ab. Wie der Fachmann weiß, führen dabei große Temperaturdifferenzen zu einer größeren Wärmeenergieübertragung und damit zu einer schnelleren Erwärmung des Körpers. Durch eine geeignete Wahl des Temperaturprofils in Förderrichtung des Ofens kann damit der zeitliche Verlauf der Erwärmung der Platten gesteuert werden. Wünschenswert ist dabei eine möglichst homogene Erwärmung, d.h. ein möglichst gleichbleibender Erwärmungs- bzw. Abkühlungsgradient während der Behandlung.

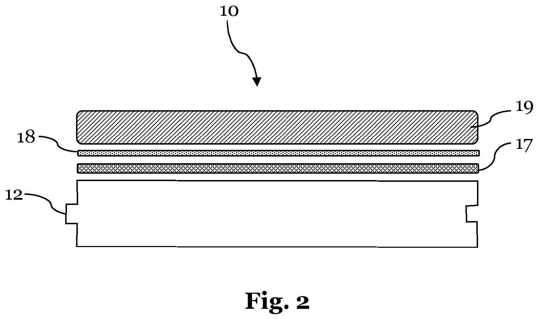

In Zone O2 steigt die Temperatur in Förderrichtung relativ stärker an als in Zone O1. In Zone O3 wird die Temperatur konstant gehalten und die Platten bzw. Paneele werden für einige Minuten, während des Transports durch Zone O3, auf der gewünschten Zieltemperatur gehalten. In Zone O4 wird die Temperatur im Ofen langsam in Förderrichtung gesehen abgesenkt, wie man dem relativ flachen Verlauf der Temperatur in Figur 2b entnehmen kann. In den folgenden Zonen O5 bis O7 fällt die Temperatur dann immer weiter ab, so dass die Platten bzw. Paneele langsam auf eine Temperatur nahe der Raumtemperatur (wie bspw. 30 oder 35°C) abgekühlt werden. Die Abkühlphase ist vorteilhaft, wie dargestellt, länger als die Aufheizphase, d.h. die Abkühlung sollte vorzugsweise relativ langsam erfolgen. Nachdem die Platten den Ofen verlassen haben können sie beliebig gelagert oder weiterverarbeitet werden.

In Fig. 2 ist ein Paneel 10 dargestellt, dass mit mehreren Folien bzw. Schichten versehen ist und bspw. als Fußbodenpaneel verwendet werden kann. Das Paneel 10 weist eine Platte (Trägerplatte) aus PVC 12 auf, die an ihren jeweiligen Kanten Feder-Nutverbindungen aufweist, die es erlauben einzelne Paneele 10 miteinander zu verbinden. Die Trägerplatte besteht aus einem extrudierten Hart-PVC (PVC-U) und kann bspw. nach einem der hierin beschriebenen Verfahren wärmebehandelt sein.

Oberhalb der (Träger)platte 12 ist eine PVC-Folie 17 angeordnet. Auf der Oberseite der Folie 17 ist ein dekoratives Muster (Dekorschicht) 18 aufgedruckt, vorzugsweise mittels eines Digitaldruckverfahrens. Dieses dekorative Muster kann je nach Anwendung ein beliebiges Muster darstellen. Über PVC-Folie und Dekorschicht ist ein mittels UV-Bestrahlung aushärtbares Polymerschichtsystem 19 vorgesehen. Die Darstellung ist nicht maßstabsgetreu und die Schichten sind hier mit einem, im realen Produkt nicht vorhandenen, Abstand zueinander dargestellt, um sie klarer sichtbar zu machen. Insbesondere ist die Platte 12 erheblich dicker als die darauf angebrachten Schichten, nämlich im Bereich mehrerer mm, wohingegen die darauf aufgebrachten Schichten insgesamt nur einen Bruchteil eines mm ausmachen.

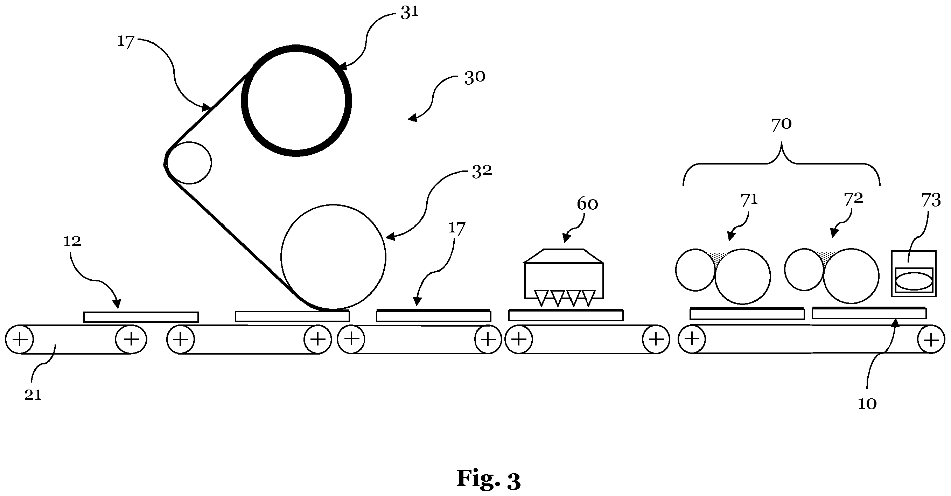

Im Folgenden soll anhand der Fig. 3 beispielhaft die Herstellung eines erfindungsgemäßen Paneels, bzw. das hierzu erforderliche Verfahren, beschrieben werden. Fig. 3 zeigt schematisch eine Beschichtungsanlage zur Beschichtung von Platten 12 bzw. zur Herstellung von Paneelen 10. Die Platten 12 bestehen aus Hart-PVC mit einer Dicke von 4-8 mm und wurden vorzugweise vorab der hierin beschriebenen Wärmebehandlung unterzogen. Alternativ kann die hierin beschriebene Wärmebehandlung aber auch nachträglich am fertigen Paneel 10 oder einem Zwischenprodukt vorgenommen werden. Die Platten 12 werden über eine Rollenförderanlage 21 durch die verschiedenen Stationen der Beschichtungsanlage geführt. Die dargestellten Beschichtungsstationen sind nicht abschließend zu verstehen, sondern dienen nur beispielhaft der Erläuterung des erfindungsgemäßen Verfahrens und sind rein schematisch dargestellt. Vor, hinter und zwischen den gezeigten Stationen können weitere Bearbeitungsstationen vorgesehen sein, wie beispielsweise weitere Trocknungsstationen, Stationen zur Aufbringung von Primern, Stationen zur Aufbringung von Spachteln usw. Die erste Station 30 soll eine Kalander-Einheit darstellen, mit der die PVC-Folie 17 auf die Oberseite der Platten 12 appliziert wird. Die Folie wird von einer Zufuhrrolle 31 abgerollt und mittels einer beheizten Kalander-Walze 32 auf der Oberseite der Platten 12 befestigt. Ein Zuschnitt der Folie erfolgt durch geeignete dem Fachmann grundsätzlich bekannte Schneidmittel (nicht dargestellt).

In Station 60 wird mittels eines Digitaldrucks ein dekoratives Dekor, wie insbesondere ein Echtholzdekor, auf die PVC-Folie 17 aufgedruckt. Nach dem Druck wird in der Beschichtungsstation 70 eine Polymerschicht aufgetragen. Die Polymerschicht wird mit einem Härtegradienten aufgetragen, so dass die Härte der Polymerschicht mit zunehmender Tiefe von der Oberfläche der Polymerschicht her gesehen im Wesentlichen kontinuierlich abnimmt. Zu diesem Zweck wird in einer ersten Beschichtungseinheit 71 eine erste Polymerschicht basierend auf einem polymerisierbaren Acrylatsystem aufgetragen. Auf diese erste Polymerschicht wird in Station 72 eine weitere Polymerschicht Nass-in-Nass aufgetragen. Die zweite Polymerschicht weist beispielsweise einen höheren Doppelbindungsanteil auf, wie es im Detail in der oben erwähnten Anmeldung zum Härtegradienten beschrieben ist. Die beiden Polymerschichten werden in den Stationen 71 und 72 Nass-auf-Nass aufgetragen, so dass es an der Grenzfläche der beiden Schichten zu einer teilweisen Vermischung kommt. In Station 73 werden die beiden Polymerschichten unter Einwirkung von UV-Strahlung gemeinsam ausgehärtet.

Bevorzugt ist die Station 60 eine Digitaldruckstation und verwendet eine Druckfarbe basierend auf einem polymerisierbaren Acrylat. In diesem Fall ist es bevorzugt, dass zwischen den Stationen 60 und 70 keine Aushärtung der Druckfarbe stattfindet, sondern allenfalls ein Zwischentrocknungsschritt bei welchem Schritt dem polymerisierbaren Acrylat der Druckfarbe etwas Feuchtigkeit entzogen wird. In der Aushärtstation 73 werden dann die Druckfarbe und die ersten und zweiten Polymerschichten gemeinsam ausgehärtet, was zu einer besonders widerstandsfähigen Oberfläche führt.

### Vergleich Standard-PVC und wärmebehandeltes PVC

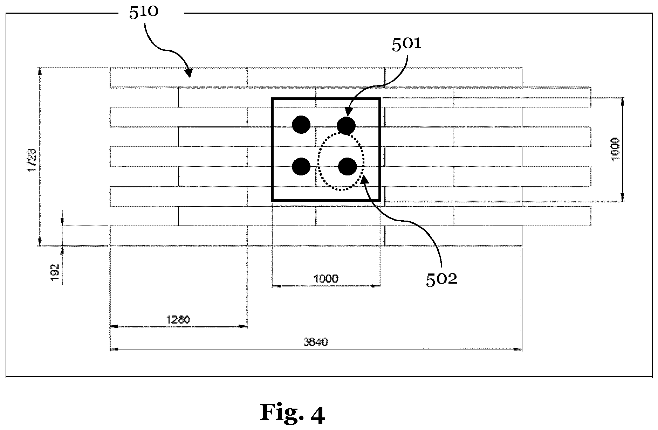

Die Wirkung der erfindungsgemäßen Wärmebehandlung wurde experimentell untersucht. Hierzu wurde eine Trägerplatte aus PVC mit einer Dichte von 2.050 kg/m³ an einem Doppelschneckenextruder extrudiert. Diese Platte wurde anschließend mit einer dekorativen Hochleistungsschicht versehen und zu Fußbodenpaneelen 510 verarbeitet. Auf diese Weise gefertigte Paneele wurden wie in Figur 4 skizziert zu einer Testfläche von ca. 2 mal 4 m verlegt ("Standard-PVC"). Zum Vergleich wurde eine identisch extrudierte Platte nach Abkühlen auf ca. 40 °C erfindungsgemäß in einem Ofen wieder auf 85 °C erwärmt und anschließend langsam wieder abgekühlt ("wärmebehandeltes PVC"). Danach erfolgte dieselbe Beschichtung, Paneelfertigung und Verlegung zu einer zweiten Testfläche, wie im Fall der unbehandelten Paneele 510.

Beide Testflächen wurden in einem Bereich von ca. 1 m² von oben mit vier IR-Strahlern 501 (als Simulation von Sonneneinstrahlung durch tief gezogene Fenster z.B. in einem Wintergarten) bestrahlt. Die Strahler erwärmten die Oberflächen der Böden bzw. Paneele mit einer Rate von ca. 1°C/min bis zu einer Oberflächentemperatur von ca. 80 °C. Während der Bestrahlung wurde die maximale Wölbung der Paneele gemessen und protokolliert. Die Ergebnisse dieses Tests sind in der unten wiedergegebenen Tabelle zusammengefasst:

| | **Standard-PVC** | **Behandeltes PVC** |
|---|---|---|
| **Start Aufwölbung nach t in min:** | 25 | Keine |
| **Start Aufwölbung bei Temperatur in °C:** | 50 | Keine |
| **Maximale Wölbung in mm** | 9,46 | Keine |
| **Maximale Wölbung bei Temperatur in °C:** | 68,6 | Keine |
| **Tₘₐₓ während Versuch in °C** | 75,6 | 81 |
| **Dauer der Bestrahlung in min** | 127 | 124 |

Im Fall des nicht-wärmebehandelten PVC ("Standard-PVC") fing sich der verlegte Boden unterhalb der Infrarotlampen 501 nach 25 min bei einer Oberflächentemperatur von 50 °C deutlich an zu wölben. Die Wölbung erfolgte großflächig, wie durch den Kreis 502 in Figur 4 angedeutet. Der Boden aus behandelten PVC Platten zeigte keine sichtbare Wölbung. Der unbehandelte Boden ("Standard-PVC") erreicht seine maximale Wölbung von 9,5 mm bei einer Oberflächentemperatur von 68,6 °C. Der Boden aus behandelten PVC Platten zeigte bei dieser Temperatur keine Veränderung. Der Test wurde nach 127 min und einer Oberflächentemperatur von 81 °C abgebrochen.

Im gesamten untersuchten Bereich war der Boden aus behandelten PVC Platten stabil und zeigte keinerlei Wölbungsverhalten. Die in dem Test erreichten Oberflächentemperaturen entsprechen denjenigen, die in der Praxis erreicht werden können, wenn Böden direkter Sonneneinstrahlung ausgesetzt werden, insbesondere bei dunklen Dekoren. Die Probleme mit dem Standard-PVC führen regelmäßig zu Reklamationen, so dass eine Reihe von Paneel-Herstellern auf ihren Verpackungen darauf hinweisen, dass die Produkte "nicht geeignet für z.B. Wintergärten und Orte mit direkter Sonneneinstrahlung" sind. Die erfindungsgemäß behandelten Platten zeigen derartige Probleme nicht.

## Patentansprüche

1. Verfahren zur Behandlung einer Platte aus Polyvinylchlorid (PVC), umfassend folgende Schritte in der angegebenen Reihenfolge:
- Bereitstellen einer Platte aus PVC;
- Erwärmen der Platte aus PVC in einem Ofen auf mindestens 70°C, wobei die Platte mit einem Aufheiz-Gradienten von durchschnittlich 4°C/min bis 15°C/min erwärmt wird;
- Abkühlen der erwärmten Platte, wobei die Platte kontrolliert abgekühlt wird und zwar mit einem Kühlgradienten von durchschnittlich 5°C/min bis 15°C/min.

2. Das Verfahren nach Anspruch 1, wobei die Platte auf mindestens die Glasübergangstemperatur erwärmt wird und vorzugsweise auf mindestens 75°C, mehr bevorzugt mindestens 79°C, mehr bevorzugt auf mindestens 81°C, noch mehr bevorzugt auf mindestens 85°C.

3. Das Verfahren nach Anspruch 1 oder 2, wobei die Platte auf der Mindesttemperatur für zumindest 3 Minuten gehalten wird, mehr bevorzugt mindestens 5 Minuten und am meisten bevorzugt mindestens 10 Minuten.

4. Das Verfahren nach einem der vorhergehenden Ansprüche, wobei die Platte mit einem Aufheiz-Gradienten von durchschnittlich 6°C/min bis 12°C/min und am meisten bevorzugt von durchschnittlich 7°C/min bis 10°C/min erwärmt wird.

5. Das Verfahren nach einem der vorhergehenden Ansprüche, wobei die Platte, vorzugsweise in einem Abkühlofen, kontrolliert abgekühlt wird und zwar mit einem Kühlgradienten von durchschnittlich 7°C/min bis 12°C/min und am meisten bevorzugt von durchschnittlich 8 °C/min bis 10°C/min.

6. Das Verfahren nach einem der vorhergehenden Ansprüche, wobei die Platte aus PVC auf einer Fördereinrichtung durch den Ofen geführt wird und der Ofen ein Durchlaufofen ist.

7. Das Verfahren nach einem der vorhergehenden Ansprüche, wobei das Abkühlen der aufgewärmten Platte in einem Durchlaufofen erfolgt.

8. Das Verfahren nach einem der vorhergehenden Ansprüche, wobei die Platte aus PVC, vor oder nach der Wärmebehandlung, mit einer PVC-Folie mit einer Stärke von 0,04 bis 0,2 mm versehen wird.

9. Paneel, insbesondere ein Wand-, Decken- oder Fußbodenpaneel, umfassend
eine Platte (12) aus Polyvinylchlorid behandelt mit einem Verfahren nach einem der Ansprüche 1 bis 8, und
einer darauf befestigten Folie (17), wobei die Folie (17) eine PVC-Folie mit einer Stärke von 0,04 bis 0,2 mm ist und ein darauf direkt aufgedrucktes dekoratives Muster (18) umfasst und über der PVC-Folie eine ausgehärtete Polymerschicht (19) vorgesehen ist.

10. Paneel nach Anspruch 9, **dadurch gekennzeichnet, dass** die Polymerschicht (19) einen Härtegradienten aufweist, so dass die Härte der Polymerschicht mit zunehmender Tiefe von der Oberfläche der Polymerschicht her gesehen im Wesentlichen kontinuierlich abnimmt.

11. Paneel nach einem der vorhergehenden. Ansprüche 9 und 10, **dadurch gekennzeichnet, dass** die zum Drucken des dekorativen Musters (18) verwendete Druckfarbe lösungsmittelhaltig ist und bevorzugt eine UV-Druckfarbe ist.

12. Paneel nach Anspruch 11, **dadurch gekennzeichnet, dass** die Druckfarbe ein polymerisierbares Acrylat enthält und/oder N-Vinylcaprolactam.

13. Paneel nach Anspruch 12, **dadurch gekennzeichnet, dass** die zum Drucken des dekorativen Musters (18) verwendete Druckfarbe ein polymerisierbares Acrylat enthält und N-Vinylcaprolactam enthält in einem Gewichtsanteil (%) in der Druckfarbe von 2 bis 50, mehr bevorzugt 5 bis 40 und am meisten bevorzugt von 10 bis 30 %.

14. Paneel nach einem der vorhergehenden Ansprüche 9 bis 13, **dadurch gekennzeichnet, dass** die Druckfarbe und die Polymerschicht gemeinsam ausgehärtet wurden, vorzugsweise durch Strahlung.

15. Paneel nach einem der vorhergehenden Ansprüche 9 bis 14, **dadurch gekennzeichnet, dass** das dekorative Muster (18) im Digitaldruck aufgebracht wurde.

16. Paneel nach einem der vorhergehenden Ansprüche 9 bis 15, **dadurch gekennzeichnet, dass** die PVC-Folie eine Stärke von 0,05 bis 0,15 mm hat, mehr bevorzugt von 0,06 bis 0,095 mm.

17. Paneel oder Verfahren nach einem der vorhergehenden Ansprüche, **dadurch gekennzeichnet, dass** die Platte (12) aus PVC eine Dicke zwischen 3 und 20 mm, bevorzugt zwischen 4 und 15 mm, mehr bevorzugt zwischen 3 und 12 mm und am meisten bevorzugt zwischen 4 und 10 mm aufweist.

18. Paneel nach einem der vorhergehenden Ansprüche 9 bis 17, **dadurch gekennzeichnet, dass** auf der PVC-Folie (17) eine Schicht umfassend einen UV-Primer vorgesehen ist.

19. Paneel nach dem vorhergehenden Anspruch, **dadurch gekennzeichnet, dass** die Schicht umfassend einen UV-Primer (14) eine Flächenmasse von 1 bis 15 g/m²hat, bevorzugt eine Flächenmasse von 1,5 bis 10 g/m², besonders bevorzugt eine Flächenmasse von 2 bis 5 g/m².

20. Paneel oder Verfahren nach einem der vorhergehenden Ansprüche, **dadurch gekennzeichnet, dass** die Platte (12) aus PVC eine extrudierte PVC-Platte ist.

21. Paneel nach einem der vorhergehenden Ansprüche 9 bis 20, **dadurch gekennzeichnet, dass** die PVC-Folie (17) mit der Platte thermisch verschweißt ist oder verklebt ist.

22. Paneel nach einem der vorhergehenden Ansprüche 9 bis 21, **dadurch gekennzeichnet, dass** in der Polymerschicht abriebfeste Partikel vorgesehen sind, wobei die abriebfesten Partikel vorzugsweise einen mittleren Durchmesser von 10 bis 150 µm, bevorzugt 20 bis 80 µm, mehr bevorzugt 25 bis 70 µm und besonders bevorzugt von 30 bis 60 µm aufweisen und weiter bevorzugt aus Korund bestehen.

23. Paneel nach einem der vorhergehenden Ansprüche 9 bis 22, **dadurch gekennzeichnet, dass** die Polymerschicht (19) auf einem oder mehreren der folgenden Acrylate basiert: 1,6-Hexandioldiacrylat, Polyesteracrylat, Polyurethanacrylsäureester und Dipropylenglycoldiacrylat.

24. Paneel nach einem der vorhergehenden Ansprüche 9 bis 23, **dadurch gekennzeichnet, dass** neben dem dekorativen Muster (18) auf der PVC-Folie (17) keine weiteren Dekorschichten, insbesondere kein Dekorpapier oder Dekorfolie angebracht sind.

25. Verfahren zur Herstellung eines Paneels, insbesondere eines Wand-, Decken- oder Fußbodenpaneels, umfassend folgende Schritte:
Durchführen eines Verfahrens nach einem der Ansprüche 1 bis 9, wobei vor oder nach der Wärmebehandlung eine PVC-Folie mit einer Stärke von 0,04 bis 0,2 mm auf die Platte aus PVC aufgebracht wird;
Aufdrucken eines dekorativen Musters direkt auf die PVC-Folie;
Auftragen zumindest einer ersten Polymerschicht auf die PVC-Folie; und
Härten der Polymerschicht.

26. Verfahren nach Anspruch 25, **dadurch gekennzeichnet, dass** eine zweite flüssige Polymerschicht auf die noch feuchte erste Polymerschicht aufgebracht wird, so dass eine teilweise Vermischung der Polymerschichten stattfindet und die beiden Polymerschichten gemeinsam ausgehärtet werden, so dass die ausgehärtete endgültige Polymerschicht einen Härtegradienten aufweist, wobei die Härte der Beschichtung mit zunehmender Tiefe von der Oberfläche der resultierenden Beschichtung her gesehen abnimmt.

27. Verfahren nach einem der vorhergehenden Verfahrensansprüche 25 oder 26, **dadurch gekennzeichnet, dass** zum Aufbringen der PVC-Folie ein beheizter Kalander verwendet wird, derart, dass die PVC-Folie mit der Trägerplatte thermisch verschweißt wird.

28. Verfahren nach einem der vorhergehenden Verfahrensansprüche 25 bis 27, **dadurch gekennzeichnet, dass** das dekorative Muster mittels Digitaldruck direkt auf die PVC-Folie aufgedruckt wird.

29. Verfahren nach einem der vorhergehenden Verfahrensansprüche 25 bis 28, **dadurch gekennzeichnet, dass** die PVC-Folie eine Stärke von 0,05 bis 0,15 mm hat, mehr bevorzugt von 0,06 bis 0,095 mm.

30. Paneel oder Verfahren nach einem der vorhergehenden Ansprüche 9 bis 29, **dadurch gekennzeichnet, dass** das direkt aufgedruckte dekorative Muster eine Holz-, Stein-, oder Fliesenoberfläche imitiert.

31. Paneel oder Verfahren nach einem der vorhergehenden Ansprüche, **dadurch gekennzeichnet, dass** die Platte (12) aus Polyvinylchlorid keine Weichmacher enthält.

32. Paneel oder Verfahren nach einem der vorhergehenden Ansprüche, **dadurch gekennzeichnet, dass** die Platte (12) aus Polyvinylchlorid aus Hart-PVC (PVC-U) besteht.

## Claims

1. A method of treating a polyvinyl chloride (PVC) plate comprising the following steps in the given order:
- providing a PVC plate;
- heating the PVC plate in an oven to at least 70°C, wherein the plate is heated with a heating gradient of 4°C/min to 15°C/min on average;
- cooling the heated plate, wherein the plate is cooled down in a controlled manner, namely with a cooling gradient of 5°C/min to 15°C/min on average.

2. The method according to claim 1, wherein the plate is heated to at least the glass transition temperature and preferred to at least 75°C, preferably to at least 79°C, more preferably to at least 8i°C, even more preferably to at least 85°C.

3. The method according to claim 1 or 2, wherein the plate is kept at the minimum temperature for at least 3 minutes, more preferably at least 5 minutes and most preferably at least 10 minutes.

4. The method according to one of the preceding claims, wherein the plate is heated with a heating gradient of 6°C/min to 12°C/min on average and most preferably of 7°C/min to 10°C/min on average.

5. The method according to one of the preceding claims, wherein the plate is, preferably in a cooling oven, cooled down in a controlled manner, namely with a cooling gradient of 7°C/min to 12°/min on average and most preferably of 8°C/min to 10°C/min on average.

6. The method according to one of the preceding claims, wherein the PVC plate is fed through the oven on a conveyor and the oven is a continuous oven.

7. The method according to one of the preceding claims, wherein the cooling of the heated plate occurs in a continuous oven.

8. The method according to one of the preceding claims, wherein the PVC plate is provided before or after the heat treatment with a PVC film having a thickness of 0.04 to 0.2 mm.

9. A panel, in particular a wall, ceiling or floor panel, comprising a polyvinyl chloride plate (12) treated with a method according to one of the claims 1 to 8, and a film (17) attached thereon, wherein the film (17) is a PVC film having a thickness of 0.04 to 0.2 mm and comprises a decorative pattern (18) directly printed thereon, and a cured polymer layer (19) is provided over the PVC film.

10. The panel according to claim 9, **characterized in that** the polymer layer (19) has a hardness gradient, so that the hardness of the polymer layer essentially decreases continuously with increasing depth as seen from the surface of the polymer layer.

11. The panel according to one of the preceding claims 9 and 10, **characterized in that** the printing ink used for printing the decorative pattern is solvent-containing and preferably a UV printing ink.

12. The panel according to claim 11, **characterized in that** the printing ink contains a polymerizable acrylate and/or N-vinylcaprolactam.

13. The panel according to claim 12, **characterized in that** the ink used for printing the decorative pattern (18) contains a polymerizable acrylate and N-vinylcaprolactam in a weight proportion (%) of 2 to 50, more preferably 5 to 40, and most preferably 10 to 30, in the printing ink.

14. The panel according to one of the preceding claims 9 to 13, **characterized in that** the printing ink and the polymer layer were cured together, preferably by radiation.

15. The panel according to one of the preceding claims 9 to 14, **characterized in that** the decorative pattern (18) was applied by digital printing.

16. The panel according to one of the preceding claims 9 to 15, **characterized in that** the PVC film has a thickness of 0.05 to 0.15 mm, more preferably of 0.06 to 0.095 mm.

17. The panel according to one of the preceding claims, **characterized in that** the PVC plate (12) has a thickness between 3 and 20 mm, preferably between 4 and 15 mm, more preferably between 3 and 12 mm, and most preferably between 4 and 10 mm.

18. The panel according to one of the preceding claims, **characterized in that** a layer comprising a UV primer is provided on the PVC film.

19. The panel according to the preceding claim, **characterized in that** the layer comprising a UV primer (14) has a grammage between 1 and 15 g/m², preferably a grammage between 1.5 and 10 g/m², particularly preferred a grammage between 2 and 5 g/m².

20. The panel according to one of the preceding claims, **characterized in that** the PVC plate (12) is an extruded PVC plate.

21. The panel according to one of the preceding claims 9 to 20, **characterized in that** the PVC film (17) is glued or thermally welded to the plate.

22. The panel according to one of the preceding claims 9 to 21, **characterized in that** abrasion-resistant particles are provided in the polymer layer, wherein the abrasion-resistant particles preferably have an average diameter of 10 to 150 µm, preferably 20 to 80 µm, more preferably 25 to 70 µm and particularly preferred of 30 to 60 µm and further preferred consist of corundum.

23. The panel according to one of the preceding claims 9 to 22, **characterized in that** the polymer layer (19) is based on one or more of the following acrylates: 1,6-hexanedioldiacrylate, polyester acrylate, polyurethane acrylic acid ester and dipropylene glycol diacrylate.

24. Panel according to one of the preceding claims 9 to 23, **characterized in that,** besides the decorative pattern (18) on the PVC film (17), no further decor layers, in particular no decor papers or decor films are provided.

25. A method for manufacturing a panel, in particular a wall, ceiling or floor panel, comprising the following steps:
performing a method according to one of the claims 1 to 9, wherein a PVC film having a thickness of 0.04 to 0.2 mm is applied before or after the heat treatment on the PVC plate;
printing a decorative pattern directly on the PVC film;
applying at least a first polymer layer onto the PVC film; and
curing of the polymer layer.

26. The method according to claim 25, **characterized in that** a second liquid polymer layer is applied onto the still moist first polymer layer so that a partial mixing of the polymer layers occurs and the polymer layers are cured together such that the cured final polymer layer has a hardness gradient, wherein the hardness of the coating decreases with increasing depth as seen from the surface of the resulting coating.

27. The method according to one of the preceding method claims 25 or 26, **characterized in that** a heated calender is used for applying the PVC film in such a way that the PVC film is thermally welded to the carrier plate.

28. The method according to one of the preceding method claims 25 to 27, **characterized in that** the decorative pattern is directly printed on the PVC film by means of digital printing.

29. The method according to one of the preceding method claims 25 to 28, **characterized in that** the PVC film has a thickness of 0.05 to 0.15 mm, more preferably of 0.06 to 0.095 mm.

30. The panel or method according to one of the preceding claims 9 to 29 **characterized in that** the directly printed decorative pattern imitates a wood, stone or tile surface.

31. The panel or method according to one of the preceding claims, **characterized in that** the polyvinyl chloride plate (12) does not contain plasticizers.

32. The panel or method according to one of the preceding claims, **characterized in that** the polyvinyl chloride plate (12) consists of hard PVC (PVC-U).

## Revendications

1. Procédé pour le traitement d'une plaque en poly(chlorure de vinyle) (PVC), comprenant les étapes suivantes, dans l'ordre indiqué :
- obtention d'une plaque en PVC ;
- chauffage de la plaque en PVC dans un four à au moins 70 °C, la plaque étant chauffée avec un gradient de montée en température en moyenne de 4 °C/min à 15 °C/min ;
- refroidissement de la plaque chauffée, la plaque étant refroidie d'une manière régulée, et plus précisément avec un gradient de refroidissement en moyenne de 5 °C/min à 15 °C/min.

2. Procédé selon la revendication 1, dans lequel la plaque est chauffée à au moins la température de transition vitreuse, et de préférence à au moins 75 °C, plus préférentiellement à au moins 79 °C, plus préférentiellement à au moins 81 °C, d'une manière encore plus préférée à au moins 85 °C.

3. Procédé selon la revendication 1 ou 2, dans lequel la plaque est maintenue à la température minimale pendant au moins 3 minutes, plus préférentiellement pendant au moins 5 minutes et d'une manière tout spécialement préférée pendant au moins 10 minutes.

4. Procédé selon l'une des revendications précédentes, dans lequel la plaque est chauffée avec un gradient de montée en température en moyenne de 6 °C/min à 12 °C/min et de la manière la plus préférée en moyenne de 7 °C/min à 10 °C/min.

5. Procédé selon l'une des revendications précédentes, dans lequel la plaque est refroidie d'une manière régulée, de préférence dans un four de refroidissement, et plus précisément avec un gradient de refroidissement en moyenne de 7 °C/min à 12 °C/min et d'une manière tout spécialement préférée en moyenne de 8 °C/min à 10 °C/min.

6. Procédé selon l'une des revendications précédentes, dans lequel la plaque en PVC est guidée sur un dispositif de transport traversant le four, et le four est un four à passage continu.

7. Procédé selon l'une des revendications précédentes, dans lequel le refroidissement de la plaque chauffée a lieu dans un four à passage continu.

8. Procédé selon l'une des revendications précédentes, dans lequel la plaque en PVC est, avant ou après le traitement thermique, pourvue d'une feuille de PVC ayant une épaisseur de 0,04 à 0,2 mm.

9. Panneau, en particulier panneau mural, de plafond ou de plancher, comprenant une plaque (12) en poly(chlorure de vinyle) traitée avec un procédé selon l'une des revendications 1 à 8, et une feuille (17) fixée par-dessus, la feuille (17) comprenant une feuille de PVC ayant une épaisseur de 0,04 à 0,2 mm et portant un motif décoratif (18) directement imprimé sur elle, et une couche polymère durcie (19) étant prévue par-dessus la feuille de PVC.

10. Panneau selon la revendication 2, **caractérisé en ce que** la couche polymère (19) présente un gradient de dureté, de telle sorte que la dureté de la couche polymère diminue essentiellement en continu quand augmente la profondeur à partir de la surface de la couche polymère.

11. Panneau selon l'une des revendications précédentes 9 et 10, **caractérisé en ce que** l'encre d'imprimerie utilisée pour imprimer le motif décoratif (18) contient un solvant et de préférence est une encre d'imprimerie UV.

12. Panneau selon la revendication 11, **caractérisé en ce que** l'encre d'imprimerie contient un acrylate polymérisable et/ou du N-vinylcaprolactame.

13. Panneau selon la revendication 12, **caractérisé en ce que** l'encre d'imprimerie utilisée pour l'impression du motif décoratif (18) contient un acrylate polymérisable et contient du N-vinylcaprolactame selon une proportion pondérale (%) dans l'encre d'imprimerie de 2 à 50, plus préférentiellement de 5 à 40 et d'une manière tout spécialement préférée de 10 à 30 %.

14. Panneau selon l'une des revendications précédentes 9 à 13, **caractérisé en ce que** l'encre d'imprimerie et la couche polymère sont durcies ensemble, de préférence sous l'effet d'un rayonnement.

15. Panneau selon l'une des revendications précédentes 9 à 14, **caractérisé en ce que** le motif décoratif (18) est appliqué par impression numérique.

16. Panneau selon l'une des revendications précédentes 9 à 15, **caractérisé en ce que** la feuille de PVC a une épaisseur de 0,05 à 0,15 mm, plus préférentiellement de 0,06 à 0,095 mm.

17. Panneau ou procédé selon l'une des revendications précédentes, **caractérisé en ce que** la plaque (12) en PVC présente une épaisseur entre 3 et 20 mm, de préférence entre 4 et 15 mm, plus préférentiellement entre 3 et 12 mm et d'une manière tout spécialement préférée entre 4 et 10 mm.

18. Procédé selon l'une des revendications précédentes 9 à 17, **caractérisé en ce qu'**il est prévu sur la feuille de PVC (17) une couche comprenant un primaire UV.

19. Panneau selon la revendication précédente, **caractérisé en ce que** la couche comprenant un primaire UV (14) a une masse surfacique de 1 à 15 g/m², de préférence une masse surfacique de 1,5 à 10 g/m², d'une manière particulièrement préférée une masse surfacique de 2 à 5 g/m².

20. Panneau ou procédé selon l'une des revendications précédentes, **caractérisé en ce que** la plaque (12) en PVC est une plaque en PVC extrudée.

21. Panneau selon l'une des revendications précédentes 9 à 20, **caractérisé en ce que** la feuille de PVC (17) est soudée par voie thermique à la plaque ou collée à celle-ci.

22. Panneau selon l'une des revendications précédentes 9 à 21, **caractérisé en ce qu'**il est prévu des particules résistantes à l'abrasion dans la couche polymère, les particules résistantes à l'abrasion présentant de préférence un diamètre moyen de 10 à 150 µm, de préférence de 20 à 80 µm, plus préférentiellement de 25 à 70 µm et d'une manière particulièrement préférée de 30 à 60 µm, et encore de préférence qui sont constituées de corindon.

23. Panneau selon l'une des revendications précédentes 9 à 22, **caractérisé en ce que** la couche polymère (19) est à base d'un ou plusieurs des acrylates suivants : diacrylate de 1,6-hexanediol, acrylate de polyester, ester acrylique de polyuréthanne et diacrylate de dipropylèneglycol.

24. Panneau selon l'une des revendications précédentes 9 à 23, **caractérisé en ce que**, outre le motif décoratif (18), aucune autre couche décorative, en particulier aucun papier décoratif ni aucune feuille décorative, ne sont appliqués sur la feuille de PVC (17).

25. Procédé de fabrication d'un panneau, en particulier d'un panneau mural, de plafond ou de plancher, comprenant les étapes suivantes :
mise en œuvre d'un procédé selon l'une des revendications 1 à 9, une feuille de PVC ayant une épaisseur de 0,04 à 0,2 mm étant appliquée sur la plaque en PVC avant ou après le traitement thermique ;
impression d'un motif décoratif directement sur la feuille de PVC ;
application d'au moins une première couche polymère sur la feuille de PVC ; et
durcissement de la couche polymère.

26. Procédé selon la revendication 25, **caractérisé en ce qu'**une deuxième couche polymère liquide est appliquée sur la première couche polymère encore humide, de telle sorte qu'il se produise un mélange partiel des couches polymères, et les deux couches polymères sont durcies ensemble, de sorte que la couche polymère finale durcie présente un gradient de dureté, la dureté du revêtement diminuant quand augmente la profondeur à partir de la surface du revêtement obtenu.

27. Procédé selon l'une des revendications précédentes 25 ou 26, **caractérisé en ce que**, pour appliquer la feuille de PVC, on utilise une calandre chauffante, de telle sorte que la feuille de PVC soit thermiquement soudée à la plaque support.

28. Procédé selon l'une des revendications précédentes 25 à 27, **caractérisé en ce que** le motif décoratif est appliqué directement sur la feuille de PVC par impression numérique.

29. Procédé selon l'une des revendications précédentes 25 à 28, **caractérisé en ce que** la feuille de PVC a une épaisseur de 0,05 à 0,15 mm, plus préférentiellement de 0,06 à 0,095 mm.

30. Panneau ou procédé selon l'une des revendications précédentes 9 à 29, **caractérisé en ce que** le motif décoratif directement imprimé imite une surface de bois, de pierre ou de carreau.

31. Panneau ou procédé selon l'une des revendications précédentes, **caractérisé en ce que** la plaque (12) en poly(chlorure de vinyle) ne contient pas de plastifiant.

32. Panneau ou procédé selon l'une des revendications précédentes, **caractérisé en ce que** la plaque (12) en poly(chlorure de vinyle) est constituée de PVC rigide (PVC-U).
